# EUROPÄISCHE PATENTSCHRIFT

(11) **EP 2 482 094 B1**
(45) Veröffentlichungstag und Bekanntmachung des Hinweises auf die Patenterteilung: **12.06.2013**
(21) Anmeldenummer: 11152663.8
(22) Anmeldetag: 31.01.2011
(51) Int. Cl.: G01S 7/481, G01S 7/497

(54) **Entfernungsmessender optoelektronischer Sensor und Verfahren zur Objekterfassung**
Distance measuring opto-electronic sensor and object detection method
Capteur optoélectronique mesurant l'éloignement et procédé de détection d'objet

(43) Veröffentlichungstag der Anmeldung: 01.08.2012
(73) Patentinhaber: Sick AG, 79183 Waldkirch (DE)
(72) Erfinder: Mack, Stefan, 79104, Freiburg (DE)
(74) Vertreter: Hehl, Ulrich

(56) Entgegenhaltungen:
- EP-A1- 2 237 063
- DE-A1- 4 340 756
- DE-A1- 10 331 529
- DE-C1- 19 732 776

## Beschreibung

Die Erfindung betrifft einen entfernungsmessenden optoelektronischen Sensor und ein Verfahren zur Objekterfassung nach dem Anspruch 1 beziehungsweise 12.

Entfernungsmessende Laserscanner werden in vielen Anwendungen zur Objekterfassung eingesetzt. Ein von einem Laser erzeugter Lichtstrahl überstreicht mit Hilfe einer Ablenkeinheit, beispielsweise einem rotierenden Spiegel, periodisch eine Überwachungsebene. Das Sendelicht wird an Objekten in der Überwachungsebene remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

In der Sicherheitstechnik werden Laserscanner zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine von Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

Sensoren, die in der Sicherheitstechnik eingesetzt werden, müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen ist eine Reihe von Maßnahmen zu treffen, wie beispielsweise sichere elektronische Auswertung durch redundante, diversitäre Elektronik und eine Funktionsüberwachung oder speziell Überwachung der Verschmutzung optischer Bauteile.

Eine Schwierigkeit der Funktionsüberwachung besteht darin, dass bei freiem Überwachungsraum der ausgesandte Scanstrahl an keiner Winkelposition zurückkehrt. Für den Laserscanner ist damit zunächst nicht unterscheidbar, ob sich tatsächlich keine Objekte im Überwachungsbereich befinden oder ob eine Fehlfunktion vorliegt, beispielsweise ein Leistungsabfall des Lichtsenders oder ein Ausfall im Empfangspfad. Die übliche Lösung, die in der DE 43 40 756 A1 beschrieben ist, besteht darin, an einer rückwärtigen Winkelposition je ein internes Testziel mit hoher und geringer Remission anzubringen. Die beiden Testziele werden in jeder Scanperiode angetastet und ermöglichen so einen zuverlässigen Funktionstest an zwei Arbeitspunkten in kurzen Takten.

Auch DE 197 32 776 C1 beschreibt einen optoelektronischen Sensor mit Verwendung eines internen Testziels.

Aus Anwendersicht besteht der Wunsch nach fortgesetzter Miniaturisierung mit dem Ziel möglichst kompakter, platzsparender Sensoren, die zugleich kostengünstig sein sollen. Eine Maßnahme besteht darin, statt der einleitend genannten puls- und phasenbasierten Laufzeitmessung ein Pulsmittelungsverfahren einzusetzen. Dabei werden jeweils Folgen von vergleichsweise schwachen Einzelpulsen ausgesandt und statistisch ausgewertet. Die statistische Auswertung ermöglicht hochgenaue Messungen über große Reichweiten sogar bei gestörten Umgebungen mit hohem Fremdlichtanteil. Der Messkern für dieses Verfahren kann dabei in einen einzigen Logikbaustein, wie ein FPGA (Field Programmable Gate Array) integriert werden und beansprucht dann besonders wenig Bauvolumen.

Die Miniaturisierung führt aber auch zu einer Verkleinerung der Empfängerapertur, also des Durchmessers der Empfängerlinse. Um dadurch nicht die Detektionsfähigkeit zu beeinträchtigen, muss gleichzeitig die Sendeleistung erhöht werden. Prinzipiell sind die erforderlichen optischen Ausgangsleistungen mit Kantenemitter-Laserdioden erreichbar, die Peakleistungen von 50 W und mehr emittieren. Dazu wird jedoch durch die erforderliche Hochspannung die elektronische Laseransteuerung deutlich komplexer. Außerdem werden bei kleinen Scanköpfen schon bei Leistungen von ca. 30 W die Grenzwerte der Laserschutzklasse 1M überschritten, und das ist für einen Sicherheitslaserscanner nach EN61496-3 nicht zulässig. Hinsichtlich Augenschutz ist ein Pulsmittelungsverfahren bei vergleichbarem Signal/Rauschverhältnis wegen der raschen Folge von Sendepulsen eher noch kritischer als ein herkömmliches Einzelpulsverfahren.

Die EP 2 381 268 A1 löst dies durch den Einsatz von mindestens vier ringförmig um den Lichtempfänger angeordneten VCSEL-Laserdioden als Lichtsender. VSCEL-Laserdioden sind deutlich preiswerter als Kantenemitterdioden und können zudem auf einer Elektronikkarte beim Bestücken feinpositioniert werden, so dass eine aufwändige Senderjustierung entfällt. Außerdem benötigen sie nur Sendeoptiken mit kleinen Brennweiten und haben deshalb eine geringere Bauhöhe. Damit wird eine deutlich höhere optische Ausgangsleistung erzielt, die aber auf mehrere räumlich getrennte Einzelsender verteilt ist. Damit kann das Auge immer nur von einem Einzelstrahl getroffen werden, und es ist sichergestellt, dass nicht die gesamte Sendeleistung in das Auge eindringt.

Diese Lösung mit einer Vielzahl von VCSEL-Laserdioden hat aber gravierende Nachteile für die Referenzmessung mit einem Testziel zur Funktionsüberprüfung des Laserscanners. Denn die einzelnen Sendestrahlen durchlaufen den rückwärtigen Scanbereich, in dem sich die Testziele üblicherweise befinden, auf unterschiedlichen Höhen und zu unterschiedlichen Zeitpunkten. Man bräuchte demnach ein eigenes Testziel für jeden Einzelsender. Bei einem typischen Sichtwinkel von 270° reicht bei kleinen Bauformen der rückwärtige Raum des Laserscanners ohnehin kaum aus, um dort ein Testziel anzuordnen. Diese Problematik verschärft sich, wenn zwei Testziele mit unterschiedlicher Remission zum Test an zwei Arbeitspunkten untergebracht werden sollen. Für eine Vielzahl von je einem Testzielpaar pro Einzellichtstrahl steht damit erst recht zu wenig Bauraum zur Verfügung.

Im veröffentlichten Stand der Technik sind Sicherheitslaserscanner mit Multispot, also einer Vielzahl von Einzelemittern als Lichtsender, nicht bekannt. Damit ist auch die Problematik mit den Testzielen weniger relevant. Herkömmliche Sicherheitslaserscanner besitzen eine konzentrische Optik, bei welcher der einzige Sendestrahl auf der Achse der Empfängeroptik verläuft. Damit genügen zwei Testziele auf gleicher Höhe im rückwärtigen Scanbereich. Der Bauraum für die Testziele wird dabei mit zunehmender Miniaturisierung knapp. Beim Einsatz von Multispot-Lichtsendern in sehr kleinen Scanköpfen kann diese Anordnung aufgrund der oben geschilderten Problematik aus Platzgründen gar nicht mehr übernommen werden.

Aus der DE 102 44 641 A1 ist ein Laserscanner zum Einsatz in Fahrzeugen, insbesondere zur Erfassung der Umgebung, bekannt, bei dem zwei Lichtsender den Abtaststrahl außeraxial auf den Randbereich eines Drehspiegels aussenden. Hier handelt es sich nicht um einen Sicherheitslaserscanner. Weder bewirkt die Anordnung eine Verringerung der Baugröße, noch wird eine Lösung für die Anordnung von Testzielen angegeben.

Die ebenfalls noch unveröffentlichte europäische Patentanmeldung mit dem Aktenzeichen 10189468.1 beschreibt einen Sicherheitslaserscanner mit einer Frontscheibe, deren Innenfläche wie ein Hohlspiegel geformt ist. Dies dient dazu, den an der Frontscheibe auftretenden Reflex beim Lichtaustritt in einer optischen Falle zu bündeln. Obwohl eine solche Frontscheibe sehr vorteilhaft mit der Erfindung kombiniert werden kann, befasst sich die genannte Patentanmeldung nicht mit der Problematik der Unterbringung von Testzielen.

Es ist daher Aufgabe der Erfindung, einen Funktionstest in besonders baukleinen Laserscannern zu ermöglichen.

Diese Aufgabe wird durch einen entfernungsmessenden optoelektronischen Sensor und ein Verfahren zur Objekterfassung nach Anspruch 1 beziehungsweise 12 gelöst. Dabei wird wie herkömmlich ein Referenzziel beziehungsweise Testziel bei einer definierten Winkelposition angetastet, vornehmlich einer Winkelposition im rückwärtigen Scanbereich, und der im Sensor von dem Testziel zurückgeworfene Sendelichtstrahl dient als Referenzmessung zur Funktionsüberprüfung des Sende- und Empfangspfades. Die Erfindung geht dann von dem Grundgedanken aus, den ausgesandten Lichtstrahl nach dessen Auftreffen auf die bewegliche Ablenkeinheit nochmals auf das Testziel umzulenken. In dem knappen Bauraum bei der definierten Winkelposition befindet sich demnach nicht das Testziel, sondern eine zusätzliche Umlenkeinheit. Damit die Umlenkung auf das Testziel unabhängig von der Höhenlage des ausgesandten Lichtstrahls und gegebenenfalls auch einer lateralen Abweichung ist, hat die Umlenkeinheit zugleich bündelnde Eigenschaften. Das Testziel befindet sich also nicht in der Überwachungsebene, sondern ist hierzu versetzt angeordnet.

Die Erfindung hat den Vorteil, dass besonders kompakte Bauformen ermöglicht werden. Aufgrund der Bündelung in der Umlenkeinheit kann das Sendelicht aufgefächert werden, um Augenschutzanforderungen zu genügen, und dennoch auf ein Testziel geführt werden.

Der Lichtsender weist bevorzugt mehrere Lichtquellen auf, um mehrere zueinander im Wesentlichen parallele Einzellichtstrahlen auszusenden. Dabei sind als Lichtquellen vorzugsweise VCSELs vorgesehen. Ein solcher Lichtsender wird auch als Multispotsender bezeichnet, durch dessen Einsatz eine höhere optische Ausgangsleistung unter Einhaltung der Augenschutzbestimmungen ermöglicht wird. Mehrere Lichtquellen sind aber nicht zwangsläufig physikalisch zu verstehen, sondern es kann auch das Licht einer Lichtquelle umverteilt werden. Durch Verteilung der Sendeleistung auf eine größere Fläche verringert sich die maximale auf das Auge auftreffende Punktleistung. Die erfindungsgemäße Umlenkeinheit erlaubt einen zuverlässigen Funktionstest mit Testziel auch in dieser vorteilhaften Senderkonstellation. Unter Kompensation des gegenseitigen örtlichen und zeitlichen Versatzes der Einzellichtstrahlen kann ein gemeinsames Testziel gleichzeitig angetastet werden. Damit umfasst der Funktionstest trotz des geringen verfügbaren Bauraums alle Einzellichtstrahlen. Dabei finden Umlenkeinheit und Testziel auch bei sehr kleinen Baugrößen des Sensors im rückwärtigen Scanbereich Platz.

Die Lichtquellen sind bevorzugt ringförmig um die optische Achse des Lichtempfängers angeordnet. Es entsteht ein aus Augenschutzgründen etwas verbreiterter ausgesandter Lichtstrahl in aus Sicht des Lichtempfängers symmetrischer Anordnung. Vorzugsweise sind die Lichtquellen gleichmäßig zu einem Ring angeordnet, um diese Symmetrie sicherzustellen.

Die Lichtquellen bilden bevorzugt eine Linienanordnung seitlich des Lichtempfängers und/oder einer Empfangsoptik. Damit ist eine besonders raumsparende Anordnung möglich. Die Lichtquellen haben insbesondere einen Abstand von 7mm zueinander. Dadurch wird einerseits der Minimalabstand für Augenschutzbedingungen eingehalten, andererseits die Sendeenergie aber so gut gebündelt wie möglich. Dementsprechend sind Abweichungen von einem Abstand von 7mm zwar nicht optimal, aber dennoch möglich.

Die Umlenkeinheit weist bevorzugt einen Hohlspiegel auf. Damit genügt ein einziges optisches Element, um sowohl die Umlenkung als auch die Bündelung zu bewirken. Es eignen sich alle Formen von Hohlspiegeln, welche die erforderlichen Fokussierungseigenschaften mitbringen. Beispielsweise nimmt dabei die Krümmung in einem Schnitt senkrecht zur Überwachungsebene bevorzugt monoton zu oder monoton ab, wie bei einem Abschnitt einer Parabel, einer Hyperbel, einer Ellipse oder allgemein einer geeigneten Asphäre. Auch lateral, also innerhalb der Überwachungsebene, kann eine entsprechende Krümmung vorgesehen sein. Die Krümmung ist vorzugsweise so gewählt, dass Reflexionen des ausgesandten Lichtstrahls unabhängig von der Höhenlage gegenüber der Überwachungsebene in einen gemeinsamen Fokus abgelenkt werden. An dem Fokus oder in dessen Nähe wird das Testziel untergebracht. Dieser Fokus kann beispielsweise oberhalb oder unterhalb der Überwachungsebene angeordnet sein. Alternativ weist die Umlenkeinheit mindestens einen Spiegel und mindestens eine Linse auf. Die Umlenkung und Bündelung wird dann in jeweils einem eigenen optischen Element umgesetzt.

Der Sensor weist bevorzugt eine Frontscheibe auf, die über einen Winkelbereich, der die definierte Winkelposition umfasst, innen verspiegelt und somit Teil der Umlenkeinheit ist. Durch Realisierung der Umlenkeinheit als innen verspiegelte Frontscheibe kann auf ein zusätzliches Optikteil verzichtet werden. Damit wird eine besonders kostengünstige und baukleine Lösung erreicht.

Die Frontscheibe weist bevorzugt in der Überwachungsebene und/oder in der Ebene senkrecht zu der Überwachungsebene eine Krümmung auf. Diese Krümmung führt in dem rückwärtigen Scanbereich zu der gewünschten Bündelung auf das Testziel. Im vorderen Bereich der Frontscheibe dient die Krümmung dazu, einen an den Grenzflächen der Frontscheibe entstehenden internen Frontscheibenreflex zu unterdrücken, indem der Frontscheibenreflex in eine optische Falle umgelenkt wird. Es ist denkbar, die Krümmung winkelabhängig zu variieren, beispielsweise an der definierten Winkelposition des Testziels eine Krümmung vorzusehen und sonst nicht, oder die Krümmung nur im vorderen Bereich vorzusehen.

Die Frontscheibe weist bei geeigneter Krümmung die Form eines Hohlspiegels auf. Dazu dient etwa eine kelchförmige Formgebung. Allgemein entsprechen vorteilhafte Krümmungen der Frontscheibe an der definierten Winkelposition und Krümmungen der Umlenkeinheit einander, wenn die Frontscheibe innen verspiegelt ist und somit die Aufgabe der Umlenkeinheit übernimmt. Deshalb sind insbesondere für die Frontscheibe solche Krümmungen vorteilhaft, wie sie oben für einen Hohlspiegel beschrieben sind, und umgekehrt.

Der Sensor weist bevorzugt nur ein Testziel auf. Damit kann zusätzlich Bauraum eingespart werden. Das einzige Testziel hat besonders bevorzugt eine hohe Remission oder ist optisches Prisma oder ein Retroreflektor. Mit dem Prisma kann beispielsweise eine 180°-Strahlumlenkung mit einigen Millimetern Strahlversatz erreicht werden. Der Retroreflektor wirft alles einfallende Licht in sich zurück. Damit geht beim Test möglichst wenig Sendeleistung verloren. Ein Test mit geringer Sendeleistung lässt sich dann durch Herabsetzen der Sendeleistung durchführen.

Der Lichtsender ist bevorzugt dafür ausgebildet, an der definierten Winkelposition den Lichtstrahl in einem Teil der Scanperioden mit hoher Sendeleistung und in einem Teil der Scanperioden mit geringer Sendeleistung auszusenden. Bei hoher Sendeleistung werden dann beispielsweise alle Einzellichtsender eines Multispotsenders mit maximaler Leistung aktiviert. Entsprechend wird für eine geringe Sendeleistung die Peakleistung herabgesetzt und/oder eine geringe Sendeleistung wird durch Aktivieren nur einer oder einiger Lichtquellen des Lichtsenders eingestellt. Durch Alternieren in aufeinanderfolgenden Scanperioden werden wie herkömmlich Tests an zwei unterschiedlichen Arbeitspunkten vorgenommen, und dabei kommt der Sensor dennoch mit nur einem Testziel aus.

Vorzugsweise ist eine Winkelmesseinheit vorgesehen, mittels derer die Winkelstellung der Ablenkeinheit erfassbar ist, so dass für erfasste Objekte in der Überwachungsebene zweidimensionale Positionskoordinaten zur Verfügung stehen. Damit wird eine vollständige Positionserfassung innerhalb der Überwachungsebene möglich. Zusätzlich können bei Bedarf auch Objektkonturen vermessen werden.

Der Sensor ist bevorzug als Sicherheitsscanner mit einem Sicherheitsausgang ausgebildet, indem in der Auswertungseinheit bestimmbar ist, ob sich ein Objekt in einem Schutzfeld innerhalb der Überwachungsebene befindet, und daraufhin ein sicherheitsgerichtetes Abschaltsignal über den Sicherheitsausgang ausgebbar ist. In sicherheitstechnischer Anwendung ist das Ausschließen von Störungen durch zuverlässige Funktionstests besonders wichtig, weil davon Gesundheit und Leben von Personen abhängen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform des erfindungsgemäßen Laserscanners;
- Fig. 2: eine schematische Schnittdarstellung des Laserscanners gemäß Fig. 1 bei veränderter Orientierung der Ablenkeinheit in einen rückwärtigen Scanbereich;
- Fig. 3: eine vereinfachte Draufsicht auf den Laserscanner gemäß Fig. 1 zur Erläuterung unterschiedlicher Scanrichtungen;
- Fig. 4a: eine Draufsicht auf Lichtsender und Lichtempfänger des Laserscanners gemäß Fig. 1;
- Fig. 4b: eine Draufsicht auf Lichtsender und Empfangsoptik in einer alternativen Anordnung zu Fig. 4a; und
- Fig. 5: eine schematische Schnittdarstellung einer weiteren Ausführungsform des erfindungsgemäßen Laserscanners.

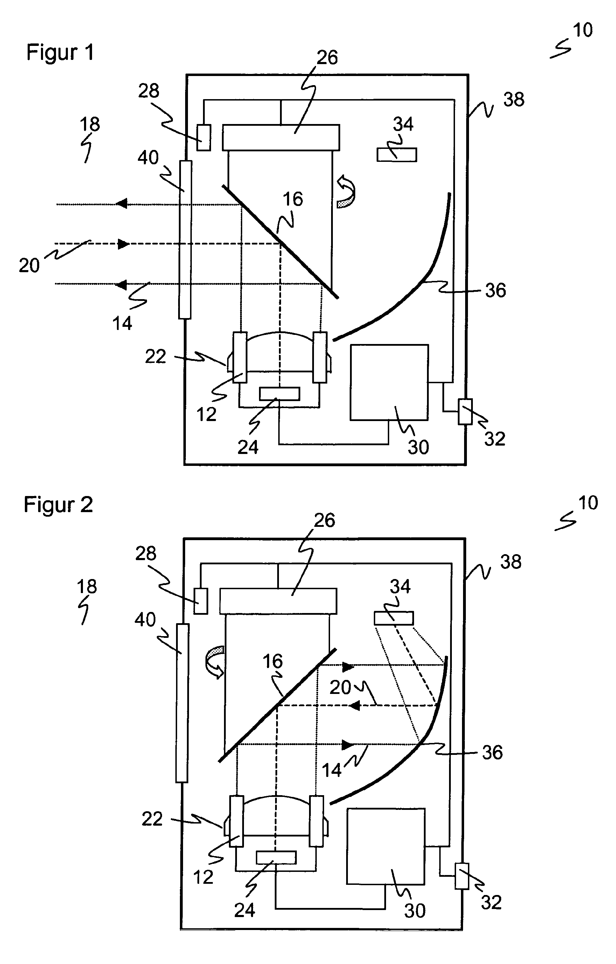

Fig. 1 zeigt eine schematische Schnittdarstellung durch einen erfindungsgemäßen optoelektronischen Sensor 10, der als Laserscanner ausgebildet ist. Ein Lichtsender 12, beispielsweise mit einer oder mehreren Laserlichtquellen, erzeugt mit Hilfe von nicht dargestellten Sendeoptiken einen Sendelichtstrahl 14 mit einzelnen kurzen Lichtimpulsen. Dabei können jeweils einzelne Pulse für ein Pulslaufzeitverfahren oder eine Folge von Pulsen für ein Pulsmittelungsverfahren ausgesandt werden. Alternativ arbeitet der Sensor 10 anstelle eines Pulsverfahrens mit dem einleitend beschriebenen Phasenverfahren.

Der Sendelichtstrahl 14 wird mittels eines drehbaren Ablenkspiegels 16 in eine Überwachungsebene 18 ausgesandt, von dort gegebenenfalls vorhandenen Objekten remittiert und kehrt dann, je nach optischen Eigenschaften der Objektoberfläche abgeschwächt und/oder aufgestreut, zumindest teilweise als remittierter Lichtstrahl 20 zu dem Sensor 10 zurück. Dort trifft der remittierte Lichtstrahl 20 erneut auf die Ablenkeinheit 16 und wird durch eine Empfangsoptik 22 auf einen Lichtempfänger 24 geleitet, beispielsweise eine Photodiode.

Die Ablenkeinheit 16 ist als Drehspiegel ausgestaltet, der durch Antrieb eines Motors 26 kontinuierlich rotiert. Der von dem Lichtsender 12 erzeugte Sendelichtstrahl 14 überstreicht somit die durch die Rotationsbewegung erzeugte Überwachungsebene 18. Die jeweilige Winkelstellung der Ablenkeinheit 16 wird über einen Encoder 28 erfasst, der beispielsweise eine Codescheibe und eine Gabellichtschranke umfasst. Wird von dem Lichtempfänger 24 ein remittierter Lichtstrahl 20 aus der Überwachungsebene 18 empfangen, so kann aus der Winkelstellung der Ablenkeinheit 16 mittels des Encoders 28 auf die Winkellage des angetasteten Objektes in der Überwachungsebene 18 geschlossen werden.

Zusätzlich wird die Laufzeit der einzelnen Laserlichtpulse von ihrem Aussenden bis zu dem Empfang nach Reflexion an dem Objekt in der Überwachungsebene 18 ermittelt. Aus der Lichtlaufzeit wird unter Verwendung der Lichtgeschwindigkeit auf die Entfernung des Objektes von dem Sensor 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in der Überwachungsebene 18 zur Verfügung.

Speziell in sicherheitstechnischen Anwendungen ist Ziel der Auswertung, ein Sicherheitssignal an einem Sicherheitsausgang 32 (OSSD, Output Signal Switching Device) bereitzustellen, beispielsweise um einen Nothalt einer angeschlossenen Maschine auszulösen. In dieser Anwendung werden vorzugsweise auch die einleitend genannten Maßnahmen eingehalten, um die einschlägigen Sicherheitsnormen zu erfüllen. Über die Winkel- und Entfernungsdaten berechnet die Auswerteeinheit 30 den Ort eines Objektes in der Überwachungsebene 18. Dies wird mit einem zweidimensionalen Schutzfeld verglichen, dessen Geometrie durch entsprechende Parameter in einem Speicher der Auswertungseinheit 30 abgelegt ist. Damit erkennt die Auswertungseinheit 30, ob das Schutzfeld verletzt ist, also ob sich ein unzulässiges Objekt darin befindet und schaltet je nach Ergebnis den Sicherheitsausgang 32. Je nach Ausführungsform ist denkbar, die Auswertung oder Teile der Auswertung statt in einer internen Auswertungseinheit 30 in einer übergeordneten Steuerung vorzunehmen.

Mit dem Sensor 10 kann ein Sichtwinkel von bis zu 270° und mehr überwacht werden. Der verbleibende Winkelbereich, der auch als rückwärtiger Scanbereich bezeichnet wird, ist eine Totzone, in der keine Objekte erfasst werden. Dieser Bereich wird erfindungsgemäß genutzt, um ein Testziel 34 unterzubringen, das von dem Sendestrahl 14 über eine zusätzliche Umlenkeinheit 36 angetastet und an dem der Sendelichtstrahl 14 auf dem umgekehrten Lichtweg innerhalb des Sensors 10 auf den Lichtempfänger 24 zurückgeworfen wird. Damit kann der gesamte optische und elektronische Sende- und Empfangsweg getestet werden. Alle genannten Funktionskomponenten sind in einem Gehäuse 38 angeordnet, das frontseitig, also im Bereich des Lichtaus- und Lichteintritts, eine Frontscheibe 40 aufweist.

Figur 2 zeigt nochmals den Sensor 10 bei einer Winkelstellung der Ablenkeinheit 16 in dem rückwärtigen Scanbereich. Dabei bezeichnen hier und im Folgenden gleiche Bezugszeichen die gleichen Merkmale. Die Darstellungen der Figuren 1 und 2 unterscheiden sich durch die Spiegelung der Ablenkeinheit 16, die einer beispielhaften Verdrehung um 180° entspricht.

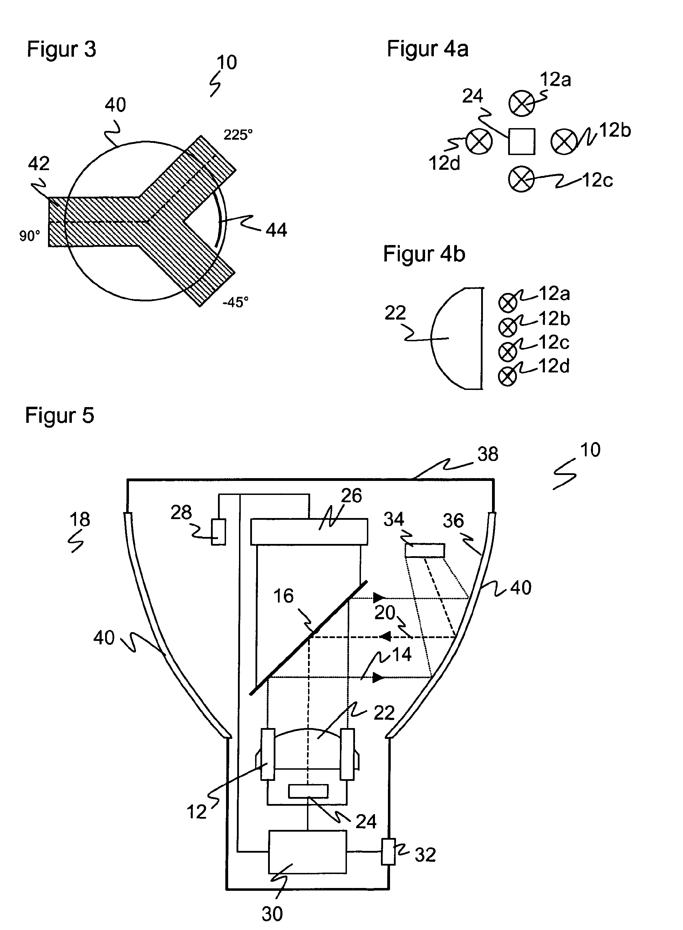

Um den Zweck der zusätzlichen Umlenkeinheit 36 zu erläutern, zeigt Figur 3 eine sehr vereinfachte Draufsicht des Sensors 10 und einiger beispielhafter Scanrichtungen, nämlich frontal nach vorne beziehungsweise 90° und die beiden Winkelstellungen -45° und 225°, welche den rückwärtigen Scanbereich begrenzen. Die gemusterten Balken 42 geben die Sende- und Empfangsstrahlbüschel für diese drei Scanrichtungen wieder. Wie leicht erkennbar, ist der Bauraum 44 für das Testziel 34 außerordentlich begrenzt. Dabei kann man beispielsweise Abmessungen von 80 mm für den Durchmesser der Frontscheibe 40 und von 25 mm für den Durchmesser der Sende- und Empfangsstrahlbüschel annehmen.

Dieses Problem verschärft sich erheblich, wenn der Lichtsender 12 als Multispotsender ausgebildet ist. Figur 4a zeigt eine vereinfachte Draufsicht auf den Lichtempfänger 24 und mehrere, hier beispielhaft vier Lichtquellen 12a-d, die ringförmig um die optische Achse des Lichtempfängers herum verteilt angeordnet sind. Als Lichtquellen 12a-d eignen sich besonders VCSEL-Laserdioden. In einer alternativen Anordnung gemäß der Draufsicht der Figur 4b sind mehrere, hier beispielhaft vier Lichtquellen 12a-d zu einer Linie angeordnet. Die Empfangsoptik 22 kann dabei wie dargestellt einseitig begradigt werden, um Raum für die Lichtquellen 12a-d und deren Sendelichtstrahlen zu schaffen. Der Abstand der Lichtquellen 12a-d untereinander beträgt bevorzugt 7mm, um Augenschutzbedingungen einzuhalten.

Während der Drehbewegung der Ablenkeinheit 16 wandern die Lichtflecke der Lichtquellen 12a-d in einer Rotationsbewegung um die optische Achse des Lichtempfängers. Die Einzelstrahlen der Lichtquellen 12a-d haben nicht nur einen Versatz zueinander, sondern wechseln auch noch die Höhenlage. In dem knappen Bauraum 44, der in Figur 3 gezeigt ist, müssten demnach bei Verwendung eines Multispotsenders sogar jeweils eigene Testziele für jede Lichtquelle 12a-d untergebracht werden.

Aus diesem Grund wird das Testziel 34 nicht direkt in dem rückwärtigen Scanbereich untergebracht. Stattdessen wird dort die Umlenkeinheit 36 angeordnet. Die Umlenkeinheit 36 kann dazu wie in den Figuren 1 und 2 dargestellt ein Hohlspiegel, alternativ aber auch aus mehreren optischen Elementen zusammengesetzt sein. Die Umlenkeinheit 16 führt den Sendelichtstrahl 14 gebündelt auf das Testziel 34. Bei Verwendung eines Multispotsenders werden alle separaten Einzelstrahlen auf ein und dasselbe Testziel 34 gebündelt und umgelenkt.

Die Figuren 1 und 2 zeigen zur Vereinfachung nur zwei getrennte Sendestrahlen. Die Krümmung der Umlenkeinheit 36 ist derart ausgelegt, dass beide getrennten Sendestrahlen an die gleiche Stelle geführt werden, an der das Testziel 34 angeordnet ist. Bei vier oder mehr ringförmig angeordneten Lichtquellen 12a-d weist die Umlenkeinheit 16 eine entsprechende Krümmung auch in der Senkrechten zur Papierebene auf.

Figur 5 zeigt eine Schnittdarstellung einer weiteren Ausführungsform der Erfindung. Dabei ist die Frontscheibe 40 gekrümmt und im rückwärtigen Scanbereich an der Innenseite verspiegelt. Dadurch übernimmt die Frontscheibe 40 zugleich die Funktion der Umlenkeinheit 36, so dass hierfür kein zusätzliches optisches Element mehr erforderlich ist, sondern lediglich eine Verspiegelung der ohnehin vorhandenen Frontscheibe 40.

Die Frontscheibe 42 ist dabei eine Freiformfläche, deren Kontur sich in dem dargestellten Schnitt in praktisch jede gewünschten Genauigkeit durch einen Polynom- oder Asphärenfit annähern lässt. Durch die besondere Krümmung wird erreicht, dass Sendelichtstrahlen 14 unabhängig von ihrer Höhenlage innere Frontscheibenreflexe erzeugen, die sich in einem gemeinsamen Fokus treffen, also beispielsweise auf der Unterseite des Haubendeckels lokal zusammenfallen. Während der Rotation der Ablenkeinheit 16 beschreibt dieser Fokus eine Kreisbahn, wenn die Frontscheibe als entsprechender Rotationskörper ausgebildet ist.

In Winkelstellungen des Überwachungsbereichs 18, also innerhalb des Sichtwinkels von beispielsweise 270°, wird in dieser Kreisbahn eine optische Falle angebracht, um die störenden Frontscheibenreflexe aufgrund nicht vollständiger Transmissivität zu absorbieren. Der von dem Messsystem nicht genutzte rückwärtige Bereich der Frontscheibe 40 wird verspiegelt und fungiert damit als Hohlspiegel der Umlenkeinheit 36. Die Anforderungen an die Krümmung der Frontscheibe 40 bei einer Ausführungsform mit verspiegelter Innenfläche der Frontscheibe 40 und an eine gemäß Figur 1 als separater Hohlspiegel ausgebildete Umlenkeinheit 36 entsprechen einander.

In vorteilhafter Weiterbildung der Erfindung ist vorgesehen, auf das übliche zweite Testziel für einen anderen Arbeitspunkt zu verzichten. Stattdessen ist vorzugsweise nur ein einziges Testziel hoher Remission vorgesehen, beispielsweise ein Testziel aus einem retroreflektierenden Material. Ein solches Testziel erzeugt ein sehr starkes Echo, wenn es bei voller Sendeleistung beziehungsweise mit allen Lichtquellen 12a-d gleichzeitig angetastet wird.

Um den Sensor 10 auch bei niedrigem Signalniveau zu testen, wird anstelle eines zweiten Testziels mit geringer Remission dasselbe Testziel hoher Remission mit einer kleineren Sendeleistung angetastet. Dies kann durch Aktivieren nur einiger oder einer Lichtquelle 12a-d und/oder durch ein elektronisches Absenken der Sendepeakleistung geschehen.

## Patentansprüche

1. Entfernungsmessender optoelektronischer Sensor (10), insbesondere Laserscanner, mit einem Lichtsender (12) zum Aussenden eines Lichtstrahls (14) in eine Überwachungsebene (18), einem Lichtempfänger (24) zum Empfangen des von Objekten in der Überwachungsebene (18) remittierten Lichtstrahls (20), einer beweglichen Ablenkeinheit (16) zur periodischen Ablenkung des ausgesandten Lichtstrahls (14), um im Verlauf der Bewegung die Überwachungsebene (18) abzutasten, einer Auswertungseinheit (30), in der die Lichtlaufzeit zwischen Aussenden und Empfang des Lichtstrahls (14, 20) und daraus die Entfernung eines Objekts bestimmbar ist sowie einem Testziel (34), um an einer definierten Winkelposition der beweglichen Ablenkeinheit (16) den ausgesandten Lichtstrahl (14) innerhalb des Sensors (10) auf den Lichtempfänger (24) zu remittieren,
**gekennzeichnet durch**
eine im optischen Pfad zwischen der beweglichen Ablenkeinheit (16) und dem Testziel (34) angeordnete Umlenkeinheit (36), um den ausgesandten Lichtstrahl (14) zu bündeln und auf das Testziel (34) umzulenken.

2. Sensor (10) nach Anspruch 1,
wobei der Lichtsender (12) mehrere Lichtquellen (12a-d) aufweist, um mehrere zueinander im Wesentlichen parallele Einzellichtstrahlen auszusenden.

3. Sensor (10) nach Anspruch 2,
wobei die Lichtquellen (12a-d) ringförmig um die optische Achse des Lichtempfängers (24), insbesondere gleichmäßig zu einem Ring angeordnet sind.

4. Sensor (10) nach Anspruch 2,
wobei die Lichtquellen (12a-d) eine Linienanordnung seitlich des Lichtempfängers (24) und/oder einer Empfangsoptik (22) bilden, insbesondere mit einem Abstand von 7mm zueinander.

5. Sensor (10) nach einem der vorhergehenden Ansprüche,
wobei die Umlenkeinheit (36) einen Hohlspiegel aufweist, oder wobei die Umlenkeinheit (36) mindestens einen Spiegel und mindestens eine Linse aufweist.

6. Sensor (10) nach einem der vorhergehenden Ansprüche,
der eine Frontscheibe (40) aufweist, die über einen Winkelbereich, der die definierte Winkelposition umfasst, innen verspiegelt und somit Teil der Umlenkeinheit (36) ist.

7. Sensor (10) nach Anspruch 6,
wobei die Frontscheibe (40) in der Überwachungsebene (18) und/oder in der Ebene senkrecht zu der Überwachungsebene (18) eine Krümmung aufweist, insbesondere kelchförmig ausgebildet ist.

8. Sensor (10) nach einem der vorhergehenden Ansprüche,
der nur ein Testziel (34) aufweist, wobei insbesondere das einzige Testziel (34) eine hohe Remission aufweist, ein Retroreflektor oder ein optisches Prisma ist.

9. Sensor (10) nach einem der vorhergehenden Ansprüche,
wobei der Lichtsender (12) dafür ausgebildet ist, an der definierten Winkelposition den Lichtstrahl (14) in einem Teil der Scanperioden mit hoher Sendeleistung und in einem Teil der Scanperioden mit geringer Sendeleistung auszusenden, insbesondere eine geringe Sendeleistung durch Aktivieren nur einer oder einiger Lichtquellen (12a-d) des Lichtsenders (12) einzustellen.

10. Sensor (10) nach einem der vorhergehenden Ansprüche,
wobei eine Winkelmesseinheit (28) vorgesehen ist, mittels derer die Winkelstellung der Ablenkeinheit (16) erfassbar ist, so dass für erfasste Objekte in der Überwachungsebene (18) zweidimensionale Positionskoordinaten zur Verfügung stehen.

11. Sensor (10) nach einem der vorhergehenden Ansprüche,
der als Sicherheitsscanner mit einem Sicherheitsausgang (32) ausgebildet ist, indem in der Auswertungseinheit (30) bestimmbar ist, ob sich ein Objekt in einem Schutzfeld innerhalb der Überwachungsebene (18) befindet, und daraufhin ein sicherheitsgerichtetes Abschaltsignal über den Sicherheitsausgang (32) ausgebbar ist.

12. Verfahren zur Objekterfassung, bei dem ein Lichtstrahl (14) in eine Überwachungsebene (18) ausgesandt und der von Objekten in der Überwachungsebene (18) remittierte Lichtstrahl (20) empfangen wird, wobei der ausgesandte Lichtstrahl (14) von einer beweglichen Ablenkeinheit (16) periodisch abgelenkt wird, um die Überwachungsebene (18) abzutasten, und die Lichtlaufzeit zwischen Aussenden und Empfang des Lichtstrahls (14, 20) und daraus die Entfernung eines Objekts bestimmt wird, wobei an einer definierten Winkelposition der beweglichen Ablenkeinheit (16) der ausgesandte Lichtstrahl (14) innerhalb des Sensors (10) von einem Testziel (34) auf den Lichtempfänger (24) remittiert wird,
**dadurch gekennzeichnet,**
**dass** der ausgesandte Lichtstrahl (14) an der definierten Winkelposition nach der Ablenkeinheit (16) auf eine Umlenkeinheit (36) trifft, insbesondere einen Hohlspiegel, der den Lichtstrahl (14) bündelt und aus der Überwachungsebene heraus auf das Testziel (34) umlenkt.

13. Verfahren nach Anspruch 12,
wobei der ausgesandte Lichtstrahl (14) eine Vielzahl zueinander im Wesentlichen paralleler Einzellichtstrahlen aufweist, die insbesondere ringförmig oder linienförmig angeordnet sind.

14. Verfahren nach Anspruch 12 oder 13,
wobei der ausgesandte Lichtstrahl (14) an der definierten Winkelposition über die verspiegelte Innenfläche einer gekrümmten Frontscheibe (40) auf das Testziel (34) umgelenkt wird, die als Umlenkeinheit (36) fungiert.

15. Verfahren nach einem der Ansprüche 12 bis 14,
wobei zum Funktionstest an nur einem einzigen Testziel (34) der Lichtstrahl (14) an der definierten Winkelposition in einem Teil der Scanperioden mit hoher Sendeleistung und in einem Teil der Scanperioden mit geringer Sendeleistung ausgesandt wird, wobei insbesondere die geringe Sendeleistung dadurch erzielt wird, dass nur einer oder einige der parallelen Einzellichtstrahlen ausgesandt werden.

## Claims

1. Distance-measuring optoelectronic sensor (10), in particular laser scanner, having a light transmitter (12) for transmitting a light beam (14) into a monitoring plane (18), a light receiver (24) for receiving the remitted light beam (20) remitted from objects in the monitoring plane (18), a movable deflection unit (16) for the periodic deflection of the transmitted light beam (14) to scan the monitoring plane (18) in the course of the movement, an evaluation unit (30) for determining the light time of flight between transmission and reception of the light beam (14, 20) and therefrom the distance of an object, and a test target (34) to remit the transmitted light beam (14) onto the light receiver (24) within the sensor (10) at a defined angular position of the movable deflection unit (16),
**characterized by**
a deflector unit (36) arranged in the optical path between the movable deflection unit (16) and the test target (34) to focus and deflect the transmitted light beam (14) onto the test target (34).

2. Sensor (10) according to claim 1,
wherein the light transmitter (12) comprises a plurality of light sources (12a-d) to transmit a plurality of substantially mutually parallel individual light beams.

3. Sensor (10) according to claim 2,
wherein the light sources (12a-d) are annularly arranged around the optical axis of the light receiver (24), in particular are regularly arranged to form a ring.

4. Sensor (10) according to claim 2,
wherein the light sources (12a-d) form a linear arrangement at a side of the light receiver (24) and/or of reception optics (22), in particular in a mutual distance of 7 mm.

5. Sensor (10) according to any of the preceding claims,
wherein the deflector unit (36) comprises a concave mirror, or wherein the deflector unit (36) comprises at least one mirror and at least one lens.

6. Sensor (10) according to any of the preceding claims,
comprising a front window (40) which has an inner reflective coating in an angular region including the defined angular position and thus being part of the deflector unit (36).

7. Sensor (10) according to claim 6,
wherein the front window (40) comprises a curvature in the monitoring plane (18) and/or in a plane perpendicular to the monitoring plane (18), in particular is formed like a cup or a goblet.

8. Sensor (10) according to any of the preceding claims,
comprising only one test target (34), wherein in particular the only test target (34) has a high remission, is a retro reflector, or an optical prism.

9. Sensor (10) according to any of the preceding claims,
wherein the light transmitter (12) is configured to transmit the light beam (14) at the defined angular position in a part of the scanning periods with a high transmission power and in another part of the scanning periods with a low transmission power, in particular to set a low transmission power by activating only one or some light sources (12a-d) of the light transmitter (12).

10. Sensor (10) according to any of the preceding claims,
wherein an angle encoder (28) is provided to detect the angular position of the deflection unit (16) so that two-dimensional polar coordinates are available for detected objects in the monitoring plane (18).

11. Sensor (10) according to any of the preceding claims,
which is configured as a safety scanner with a safe output (32) by the evaluation unit (30) being configured to determine whether there is an object in a protection area within the monitoring plane (18) and to then output a safety-related shut-down signal via the safe output (32).

12. Method for object detection wherein a light beam (14) is transmitted into a monitoring plane (18) and the remitted light beam (20) remitted from objects in the monitoring plane (18) is received, wherein the transmitted light beam (14) is periodically deflected by a movable deflection unit (16) to scan the monitoring plane (18), and wherein the light time of flight between transmission and reception of the light beam (14, 20) and therefrom the distance of an object is determined, wherein at a defined angular position of the deflection unit (16) the transmitted light beam (14) is remitted by a test target (34) onto the light receiver (24) within the sensor (10),
**characterized in that** the transmitted light beam (14) impinges onto a deflector unit (36) after the deflection unit (16), in particular onto a concave mirror which focuses and deflects the light beam (14) out of the monitoring plane (18) onto the test target (34).

13. Method according to claim 12,
wherein the transmitted light beam (14) comprises a plurality of substantially mutually parallel individual light beams, which are in particular arranged in a ring shape or a line shape.

14. Method according to claim 12 or 13,
wherein the transmitted light beam is deflected onto the test target (34) at the defined angular position via a mirror-coated inner surface of a curved front window (40) functioning as the deflector unit (36).

15. Method according to any of claims 12 to 14,
wherein for a functional test at only a single test target (34) the light beam (14) is transmitted at the defined angular position with a high transmission power in a part of the scanning periods and with a low transmission power in another part of the scanning periods, wherein in particular the low transmission power is obtained in that only one or some of the parallel individual light beams are transmitted.

## Revendications

1. Capteur optoélectronique mesurant l'éloignement (10), en particulier scanner à laser, comprenant un émetteur de lumière (12) pour émettre un rayon de lumière (14) dans un plan de surveillance (18), un récepteur de lumière (24) pour recevoir le rayon du lumière (20) réémis par des objets dans le plan de surveillance (18), une unité de déflexion mobile (16) pour défléchir périodiquement le rayon de lumière émis (14) afin de palper le plan de surveillance (18) dans le parcours du mouvement, une unité d'évaluation (30) dans laquelle il est possible de déterminer le temps de parcours de la lumière entre l'émission et la réception du rayon de lumière (14, 20) et à partir de celui-ci l'éloignement d'un objet, ainsi qu'une cible test (34) destinée à réémettre à une position angulaire définie de l'unité de déflexion mobile (16) le rayon de lumière émis (14) à l'intérieur du capteur (10) vers le récepteur de lumière (24),
**caractérisé par**
une unité de renvoi (36) agencée dans le trajet optique entre l'unité de déflexion mobile (16) et la cible test (34), pour focaliser le rayon de lumière émis (14) et le renvoyer vers la cible test (34).

2. Capteur (10) selon la revendication 1,
dans lequel l'émetteur de lumière (12) comprend plusieurs sources de lumière (12a-d), afin d'émettre plusieurs rayons de lumière individuels sensiblement parallèles les uns aux autres.

3. Capteur (10) selon la revendication 2,
dans lequel les sources de lumière (12a-d) sont agencées en forme d'anneau autour de l'axe optique du récepteur de lumière (24), en particulier agencées de manière régulière pour former un anneau.

4. Capteur (10) selon la revendication 2,
dans lequel les sources de lumière (12a-d) forment un agencement en ligne latéralement par rapport au récepteur de lumière (24) et/ou à une optique de réception (22), en particulier avec une distance de 7 mm les unes par rapport aux autres.

5. Capteur (10) selon l'une des revendications précédentes,
dans lequel l'unité de renvoi (36) comprend un miroir creux, ou dans lequel l'unité de renvoi (36) comprend au moins un miroir et au moins une lentille.

6. Capteur (10) selon l'une des revendications précédentes,
qui comprend une plaque frontale (40), laquelle est spécularisée à l'intérieur sur une plage angulaire qui inclut la position angulaire définie, et qui fait ainsi partie de l'unité de renvoi (36).

7. Capteur (10) selon la revendication 6,
dans lequel la plaque frontale (40) présente dans le plan de surveillance (18) et/ou dans le plan perpendiculaire au plan de surveillance (18) une courbure, et est en particulier réalisée en forme de godet.

8. Capteur (10) selon l'une des revendications précédentes,
qui ne comprend qu'une seule cible test (34), et la cible test (34) unique présente en particulier une forte rémission, est un rétroréflecteur ou est un prisme optique.

9. Capteur (10) selon l'une des revendications précédentes,
dans lequel l'émetteur de lumière (12) et réalisé pour émettre le rayon de lumière (14) au niveau de la position angulaire définie, dans une partie des périodes de scannage avec une forte puissance d'émission et dans une partie des périodes de scannage avec une puissance d'émission plus faible, en particulier une puissance d'émission plus faible établie par activation d'une seule ou seulement de quelques-unes des sources de lumière (12a-d) de l'émetteur de lumière (12).

10. Capteur (10) selon l'une des revendications précédentes,
dans lequel il est prévu une unité de mesure angulaire (28), au moyen de laquelle il est possible de détecter la position angulaire de l'unité de déflexion (16), de sorte que l'on dispose pour les objets détectés de coordonnées de position à deux dimensions dans le plan de surveillance (18).

11. Capteur (10) selon l'une des revendications précédentes,
qui est réalisé comme scanner de sécurité avec une sortie de sécurité (32), dans lequel il est possible de déterminer dans l'unité d'évaluation (30) si un objet se trouve dans un champ de protection à l'intérieur de la zone de surveillance (18), et suite à cela un signal de coupure à des fins de sécurité est susceptible d'être émis via la sortie de sécurité (32).

12. Procédé pour la détection d'objets, dans lequel un rayon de lumière (14) est émis dans un plan de surveillance (18), et le rayon de lumière (20) réémis par des objets dans la zone de surveillance (18) est reçu, dans lequel le rayon de lumière émis (14) est périodiquement défléchi par une unité de déflexion mobile (16), afin de palper le plan de surveillance (18), et le temps de parcours de la lumière entre l'émission et la réception du rayon de lumière (14, 20) est déterminé, et au moyen de celui-ci l'éloignement d'un objet est déterminé, dans lequel le rayon de lumière émis (14) est réémis à l'intérieur du capteur (10) par une cible test (34) vers le récepteur de lumière (24), à une position angulaire définie de l'unité de déflexion mobile (16),
**caractérisé en ce que**
le rayon de lumière émis (14) tombe, à la position angulaire définie après l'unité de déflexion (16), sur une unité de renvoi (36), en particulier un miroir creux, qui focalise le rayon de lumière (14) et qui le renvoie hors du plan de surveillance vers la cible test (34).

13. Procédé selon la revendication 12,
dans lequel le rayon de lumière émis (14) comprend une pluralité de rayons de lumière individuels sensiblement parallèles les uns aux autres, qui sont agencés en particulier en forme d'anneau ou en forme de ligne.

14. Procédé selon la revendication 12 ou 13,
dans lequel le rayon de lumière émis (14) est renvoyé à la position angulaire définie via la surface intérieure spécularisée d'une plaque frontale incurvée (40) vers la cible test (34), qui fait office d'unité de renvoi (36).

15. Procédé selon l'une des revendications 12 à 14,
dans lequel, pour le test de fonctionnement, on émet le rayon de lumière (14) vers une seule cible test (34) à la position angulaire définie, dans une partie des périodes de scannage avec une forte puissance d'émission et dans une partie des périodes de scannage avec une puissance d'émission plus faible, et on obtient en particulier la puissance d'émission plus faible en émettant un seul ou seulement quelques-uns des rayons de lumière individuels parallèles.
